# NEUE EUROPÄISCHE PATENTSCHRIFT

(11) **EP 1 101 203 B2**
(45) Veröffentlichungstag und Bekanntmachung des Hinweises auf die Entscheidung über den Einspruch: **24.06.2009**
(45) Hinweis auf die Patenterteilung: 24.11.2004
(21) Anmeldenummer: 99941470.9
(22) Anmeldetag: 27.07.1999
(51) Int. Cl.: G07D 7/00

(54) **SICHERHEITSPAPIER SOWIE VERFAHREN UND VORRICHTUNG ZUR PRÜFUNG DER ECHTHEIT DARAUF AUFGEZEICHNETER URKUNDEN**
SECURITY PAPER, METHOD AND DEVICE FOR CHECKING THE AUTHENTICITY OF DOCUMENTS RECORDED THEREON
PAPIER DE SECURITE, PROCEDE ET DISPOSITIF DE VERIFICATION DE L'AUTHENTICITE DES ACTES IMPRIMES SUR CE PAPIER

(30) Priorität: 27.07.1998 DE 19833746; 28.10.1998 DE 19849762
(43) Veröffentlichungstag der Anmeldung: 23.05.2001
(60) Teilanmeldung: 04022688.8
(73) Patentinhaber: Infineon Technologies AG, 81669 München (DE); Brosow, Joergen, San Marcos, CA 92069 (US)
(72) Erfinder: BROSOW, Joergen, San Marcos, CA 92069 (US)
(74) Vertreter: Leinweber & Zimmermann
(86) Internationale Anmeldenummer: PCT/EP1999/005390
(87) Internationale Veröffentlichungsnummer: WO 2000/007151

(56) Entgegenhaltungen:
- EP-A- 0 019 191
- EP-A- 0 319 157
- EP-A- 0 536 855
- EP-A- 0 905 657
- EP-B- 0 374 763
- EP-B- 0 788 075
- WO-A-97/14112
- WO-A-98/00815
- WO-A-98/01905
- WO-A-98/19277
- WO-A-98/40930
- DE-A- 2 949 198
- DE-A- 3 005 733
- DE-A- 4 226 396
- DE-A- 19 601 358
- DE-A- 19 630 648
- GB-A- 2 272 861
- US-A- 2 143 406
- US-A- 4 472 627
- US-A- 5 300 875
- US-A- 5 528 222
- US-A- 5 779 839
- '"Hybrid organic/inorganic complementary circuits"' APPL.PHYS.LETT. Nr. 68/16, 15 April 1996, Seiten 2246 - 2248
- '"Logic Gates made from Polymer Transistors and their use in Ring Oscillators"' SCIENCE Bd. 270, 10 November 1995, Seiten 972 - 974

## Beschreibung

Die Erfindung bezieht sich auf ein Sicherheitspapier mit einer eine berührungsfreie Prüfung eines Echtheitsmerkmals ermöglichenden Struktur und auf ein Verfahren zur Prüfung der Echtheit von Urkunden, die in optisch lesbarer Form auf dem Sicherheitspapier aufgezeichnet sind.

Die Verwendung derartiger Sicherheitspapiere zur Erstellung von Urkunden dient deren Schutz vor unerlaubter Nachahmung durch Fälscher. Dies ist insbesondere bei Wertpapieren wie Banknoten, Schecks, Reiseschecks, Aktien und dgl. erforderlich. Auch für nicht unmittelbar Geld werte Papiere, wie Ausweise, Reisepässe und dgl., besteht ein Bedürfnis zur Sicherung gegen unerlaubte Nachahmung. Der verwendete Begriff "Urkunde" soll daher alle Arten von gegen unerlaubte Nachahmung zu schützenden Wertpapieren und Ausweispapieren einschließen.

Insbesondere bei.im täglichen Umlauf befindlichen Wertpapieren, beispielsweise Geldscheinen, mag es einem Fälscher gelingen, den optisch aufgezeichneten Urkundeninhalt, beispielsweise das optische Druckbild der Geldscheine, täuschend genau nachzuahmen. Hiergegen schützt das dem zur Urkundenherstellung verwendeten Sicherheitspapier wegen der dem Sicherheitspapier bei der Herstellung erteilten Struktur innewohnende Echtheitsmerkmal, das mit den einem Fälscher zur Verfügung stehenden Mitteln praktisch nicht nachahmbar sein soll. Weithin bekannt ist die Anbringung von Wasserzeichen oder die Einbringung eines Sicherheitsfadens in das Papier. Insbesondere ist es bekannt (DE 29 05 441 C3), in die Papierschicht einen magnetisierbaren oder elektrisch leitenden Sicherheitsstreifen einzubringen. Diese herkömmlichen Maßnahmen sind allerdings angesichts des Fortschritts der von Fälschern benutzten Arbeitsmittel nicht mehr als ausreichend anzusehen. Insbesondere greifen in weltpolitischen Krisengebieten kriegführende Gruppierungen oder gar ganze Staaten zur Geldfälschung als Kampfmittel. Entsprechend hoch sind die zur Fälschung eingesetzten Ressourcen.

Bei einem aus einem bekannten Sicherheitspapier (DE 196 30 648 A1) hergestellten Geldschein ist ein Transponderchip mit einer Antenne ähnlich in den Geldschein integriert wie die bei herkömmlichen Geldscheinen üblichen verschiedenen Arten von Sicherungsstreifen. Das als Antenne dienende Muster weist die Form einer Antennenspule auf, die als Dick- oder Dünnschichtstruktur direkt auf dem Transponderchip ausgebildet ist. Alternativ kann der Transponderchip in der Nachbarschaft des Metallsicherungsstreifens oder an einer Unterbrechungsstelle des Metallsicherungsstreifens lokalisiert und von der Antennenspule umgeben sein. Als weitere Möglichkeit ist der Metallsicherungsstreifen derart modifiziert, daß er selbst die Antennenspule für den Transponderchip bildet. Die Anbringung der Antennenspule auf dem Transponderchip selbst führt zu einem sehr kleinen Spulenquerschnitt mit entsprechend kleiner Sende/Empfangsempfindlichkeit. Darüber hinaus ist es herstellungstechnisch schwierig, den kleinen Transponderchip an dem Geldschein zu verankern. Die anderen vorgenannten Möglichkeiten, bei denen die Antennenspule außerhalb des Transponderchips an dem Geldschein angeordnet ist, ermöglichen zwar die Bildung größerer Spulenquerschnitte, doch ist auch hier die Bildung und Verbindung der Antennenspule mit dem Transponderchip an dem Geldschein herstellungstechnisch problematisch.

Bei einem anderen bekannten Sicherheitspapier (DE 196 01 358 A1), das insbesondere für Geldscheine anwendbar ist, ist ein Transponderchip, der einen Festwertspeicher und/oder einen Schreib/Lesespeicher aufweisen kann, in die Papierschicht eingebettet und enthält im einfachsten Fall eine eingeprägte Kennzahl, die berührungslos ausgelesen werden kann und als Echtheitsmerkmal dient. Hinsichtlich der Datenübertragung ist allgemein angegeben, daß sie durch eine Modulation einer Wechselspannung auf induktivem oder kapazitivem Weg erfolgen kann. Für die induktive Übertragung wird auf dem Transponderchip eine miniaturisierte Spule vorgesehen. Für die Übertragung auf größere Distanzen wird allgemein darauf hingewiesen, daß in bekannter Weise Antennen, Spulen mit größerer Umschlingungsfläche oder Dipole am Chip angeordnet werden.

Schließlich ist es auch bekannt, als Sicherheitsmerkmal für Dokumente einen photochromen Aufdruck zu verwenden, der in reversibler Weise seine Farbe ändert (GB 2 272 861 A).

Der Erfindung liegt die Aufgabe zugrunde, ein Sicherheitspapier der eingangs genannten Art mit verbesserter Fälschungssicherheit und Überprüfbarkeit zu schaffen sowie eine Vorrichtung zur automatischen Prüfung der Echtheit auf dem Sicherheitspapier erstellter Urkunden anzugeben.

Erfindungsgemäß wird diese Aufgabe durch die unabhängigen Ansprüche gelöst.

Bei der erfindungsgemäßen Ausgestaltung des Sicherheitspapiers erfolgt also die Prüfung auf das Vorliegen des Echtheitsmerkmals dadurch, daß an den sich in der Papierebene erstreckenden Schaltkreis das die Aussendung seines Ausgangssignals triggernde Eingangssignal übertragen wird. Vorzugsweise handelt es sich sowohl bei dem Eingangssignal als auch bei dem Ausgangssignal um eine mit der betreffenden Signalinformation modulierte Trägerfrequenzschwingung. Durch entsprechende Auslegung des Schaltkreises kann in dem Ausgangssignal jeder beliebige Informationsinhalt, vorzugsweise in binärer Form, als Echtheitsmerkmal kodiert werden. Es ist möglich, den elektronischen Schaltkreis mit einem Mikrokontroller zu versehen. Damit läßt sich jeder auf dem Sicherheitspapier erstellten Urkunde mindestens ein individuelles Echtheitsmerkmal, beispielsweise die individuelle Seriennummer des Mikrocontrollers, zuordnen. Dieses kann beispielsweise bei einer Banknote darin bestehen, daß das Echtheitsmerkmal den auf dem optisch lesbaren Druckbild der Banknote angegebenen Geldwert und/oder die angegebene Seriennummer der Banknote in kodierter Form wiedergibt.

Eine nach Anspruch 14 gestaltete Urkunde tragen insbesondere dem Umstand Rechnung, daß vor allem Geldscheine in zwei Teile aufgetrennt und der jeweils fehlende Teil fälschend ersetzt wird. Durch die Aufbringung des in der Regel unsichtbaren, aber mit technischen Mitteln, wie beispielsweise magnetisch oder durch nicht im sichtbaren Bereich liegendes Licht, erfaßbaren Echtheitsmerkmals in dem einen Teil und die Einspeicherung einer diesem Echtheitsmerkmal entsprechenden Information in den Schaltkreis auf dem anderen Teil werden die beiden Teile fälschungssicher miteinander gekoppelt. Der dem erfaßten Echtheitsmerkmal entsprechende Informationsinhalt wird bei der Echtheitsprüfung in den Schaltkreis eingegeben und dort beispielsweise durch Vergleich mit einer Referenzinformation auf Echtheit geprüft. Der Schaltkreis gibt nur dann ein die Echtheit bestätigendes Ausgangssignal aus, wenn diese Prüfung positiv verläuft.

Eine zweckmäßige Ausgestaltung des Erfindungsgedankens besteht darin, daß die den Schaltkreis bildende Struktur einen auf einen vorgegebenen Informationsinhalt eingestellten Festwertspeicher aufweist, dessen Informationsinhalt mit dem ausgesendeten Ausgangssignal übertragbar ist. Hierbei wird der dem Echtheitsmerkmal entsprechende Informationsinhalt in dem Festwertspeicher bleibend voreingestellt und mit dem ausgesendeten Ausgangssignal übertragen.

Im Rahmen der Erfindung ist auch vorgesehen, daß die den Schaltkreis bildende Struktur einen mit einem von dem empfangenen Eingangssignal übertragenen Informationsinhalt beschreibbaren Schreib/Lesespeicher aufweist, dessen Informationsinhalt mit dem ausgesendeten Ausgangssignal übertragbar ist.

Bei dieser Ausführungsform dient das Eingangssignal nicht allein dazu, auf das fest eingestellte Echtheitsmerkmal zuzugreifen, welches einer auf dem Sicherheitspapier ausgefertigten Urkunde bleibend zugeordnet ist. Vielmehr kann mit dem Eingangssignal ein Informationsinhalt auf den Schaltkreis übertragen und dort gespeichert werden, der ansprechend auf ein nachfolgend empfangenes Empfangssignal ebenfalls mit dem ausgesendeten Ausgangssignal übertragbar ist.

In schaltungstechnischer Hinsicht wird dies besonders einfach dadurch verwirklicht, daß der Schreib/Lesespeicher durch ein Schieberegister gebildet ist, in das eine binäre Darstellung des mit dem Eingangssignal übertragenen Informationsinhaltes sequentiell einspeicherbar ist. Hierbei bestimmt die Länge des Schieberegisters in Abhängigkeit vom Umfang der von den einzelnen Prüfstellen übertragenen Informationsinhalte die Anzahl der insgesamt abspeicherbaren Prüfungen. Da die Informationsinhalte vom Eingang des Schieberegisters zu dessen Ausgang durchgeschoben werden, enthält letzteres stets den aktuellsten Stand dieser Informationsinhalte, während Informationsinhalte länger zurückliegender Prüfungen, die die Speicherkapazität des Schieberegisters überschreiten, aus dem Schieberegister hinausgeschoben werden.

Ein anderer wichtiger Gedanke der Erfindung besteht darin, daß die den Schaltkreis bildende Struktur eine durch berührungslose Energieübertragung speisbare Energieversorgung aufweist. In dieser Hinsicht ist es besonders zweckmäßig, daß die Energieübertragung durch eine zur Modulation mit dem Eingangssignal vorgesehene Trägerfrequenzschwingung erfolgt. Hierdurch kann die Energieversorgung des Schaltkreises durch das in dem Patentanspruch 21 angegebene Verfahren vollständig von außen erfolgen, und der Schaltkreis benötigt keine eigene Betriebsenergiequelle, die wegen ihrer nur endlichen Lebensdauer und der Tatsache, daß sie jedenfalls mit heutigen Mitteln kaum papierdünn ausgebildet werden könnte, einer praktischen und wirtschaftlichen Verwirklichung des Sicherheitspapiers große Schwierigkeiten bereiten würde.

Es sind verschiedene Möglichkeiten denkbar, wie der Schaltkreis an dem Sicherheitspapier hergestellt werden kann. Eine dieser Möglichkeiten sieht vor, daß die den Schaltkreis bildende Struktur in die Papierschicht des Sicherheitspapiers eingebettet ist. In diesem Fall ist also der Schaltkreis beidseits von Teilschichten der Papierschicht abgedeckt. Dagegen besteht eine andere sehr zweckmäßige Alternative darin, daß das als Sende/Empfangsantenne dienende Muster außen auf die Papierschicht aufgebracht und über die als Dielektrikum dienende Papierschicht kapazitiv an den in die Papierschicht eingebetteten übrigen Teil des Schaltkreises angekoppelt ist. Diese Alternative läßt sich beispielsweise dadurch herstellen, daß der übrige Teil des Schaltkreises auf einem dünnen flexiblen Substrat vorgefertigt und während der Papierherstellung in die Papierschicht eingebracht wird, während das Antennenmuster, beispielsweise durch Drucken, auf die mit dem eingebetteten Teil des Schaltkreises versehene Papierschicht aufgebracht wird. Zwischen den auf der Papierschicht angeordneten Anschlußabschnitten des als Sende/Empfangsantenne dienenden Musters und den als Anschlußabschnitte für den übrigen Teil des Schaltkreises dienenden Bereichen des eingebetteten flexiblen Substrats befindet sich dann jeweils ein als Dielektrikum wirkender Teil der Papierschicht, der zusammen mit den beidseits dieses Teils der Papierschicht jeweils übereinanderliegenden Anschlüßabschnitten des Antennenmusters und des eingebetteten flexiblen Substrats einen die kapazitive Kopplung bewirkenden Kondensator bildet.

Erfindungsgemäß ist vorgesehen, daß die den Schaltkreis bildende Struktur einen elektronischen Schaltkreischip und ein damit verbundenes, als Sende/Empfangsantenne dienendes Muster aufweist. Das die Sende/Empfangsantenne bildende Leitermuster ermöglicht eine wirkungsvolle Signalübertragung, insbesondere wenn diese durch eine modulierte Trägerfrequenz erfolgt, auf die das Antennenmuster abgestimmt ist. Da die Flächenausdehnung des Schaltkreises im Vergleich zur Formatfläche der Banknoten und anderen Urkunden sehr klein ist, steht für das Antennenmuster reichlich Platz zur Verfügung.

Eine besonders zweckmäßige Ausgestaltung besteht darin, daß die den Schaltkreis bildende Struktur einen auf einem flexiblen Polymersubstrat ausgebildeten integrierten Polymerschaltkreischip aufweist. Diese Ausführungsform macht sich die bekannten modernen Polymerschaltkreistechniken zunutze (vgl. IEDM 97-331 "Polymeric Integrated Circuits and Light-Emitting Diodes" oder The American Association for the Advancement of Science Vol. 278, No. 5337, 17 October 1997, Seite 383 bis 384 "Patterning Electronics on the Cheap").

Das als Sende/Empfangsantenne dienende Muster weist erfindungsgemäß die Form einer Dipolantenne auf.

Die Dipolantenne ermöglicht wegen ihrer einfachen geradlinigen Form eine einfache Herstellung des Sicherheitspapiers. Insbesondere läßt sie sich als geradliniger Streifen über eine größere Papierbahn verwirklichen, wobei die einzelnen Dipolantennen der aus der Papierbahn durch Zerschneiden herzustellenden Urkunden beim Zerschneidevorgang automatisch entstehen. Vorteilhaft ist auch die mit der Dipolantenne verbundene Sende/Empfangsrichtcharakteristik. Beispielsweise werden stapelweise aufeinanderliegende Banknoten in Zählmaschinen üblicherweise derart gezählt, daß die jeweils oberste Banknote des Stapels um eine ihrer längeren Seitenkanten gewendet und dabei auf einen neuen Stapel abgelegt wird. Sofern sich die Dipolantenne senkrecht zu dieser Seitenkante erstreckt, durchläuft sie bei diesem Wendevorgang eine zur Stapelebene senkrechte Ebene, wodurch bei geeigneter Ausrichtung der Sende/Empfangscharakteristik der Zählmaschine die Ankopplung für den bei der Wendebewegung senkrecht zur Stapelebene ausgerichteten Geldschein maximal und dadurch ein Nebensprechen von den übrigen Geldscheinen des Stapels unterdrückt wird. Es versteht sich, daß die für die Signalübertragung verwendete modulierte Trägerfrequenz auf die Abmessung der Dipolantenne abgestimmt wird.

Es sind verschiedene Möglichkeiten denkbar, wie der Schaltkreischip und seine Dipolantenne an dem Sicherheitspapier verwirklicht werden können. Erfindungsgemäß ist vorgesehen, daß das die Dipolantenne bildende Muster aus zwei sich längs einer gemeinsamen Geraden erstreckenden Leiterstreifen besteht, die an ihren einander zugewandten Enden mit Anschlußbereichen des Schaltkreischips kontaktiert sind. Dabei sind die beiden Leiterstreifen durch leitfähig gemachte Abschnitte eines isolierenden dünnen Polymersubstratstreifens gebildet, zwischen dessen zwischen den einander zugewandten Enden der Leiterstreifen begrenztem isolierenden Abschnitt der Schaltkreischip angeordnet ist. Die leitfähigen Abschnitte des isolierenden dünnen Polymersubstratstreifens werden erfindungsgemäß durch Dotierung erzeugt. Weiter ist es zweckmäßig, die Leiterstreifen mit Ausnehmungen, insbesondere feinen Perforierungen, zu versehen, wodurch die Verklammerung mit der Papierschicht verbessert wird.

Die Verbindung mit dem Schaltkreischip kann dadurch erfolgen, daß der Schaltkreischip auf einem dünngeschliffenen Halbleitersubstrat ausgebildet ist, das auf dem isolierenden Abschnitt des Polymersubstratstreifens angeordnet ist. Techniken zum Dünnschleifen des Halbleitersubstrats sind bekannt.

Alternativ kann vorgesehen sein, daß der Schaltkreischip ein auf einem mit dem die Dipolantenne bildenden Muster versehenen flexiblen Polymersubstrat ausgebildeter integrierter Polymerschaltkreischip ist. Diese Ausführungsform macht sich die bekannten modernen Polymerschaltkreistechniken zunutze (vgl. IEDM 97-331 "Polymeric Integrated Circuits and Light-Emitting Diodes" oder The American Association for the Advancement of Science Vol. 278, No. 5337, 17 October 1997, Seite 383 bis 384 "Patterning Electronics on the Cheap").

Eine in allen Fällen vorteilhafte Ausgestaltung besteht darin, daß der Schaltkreischip und das die Dipolantenne bildende Muster in die Papierschicht des Sicherheitspapiers eingebettet sind. In diesem Fall sind der Schaltkreischip und die Dipolantenne beidseits von Teilschichten der Papierschicht abgedeckt.

Eine hinsichtlich der elektrischen Energieversorgung besonders vorteilhafte Alternative besteht darin, daß die Struktur einen als Energielieferant dienenden photo-voltaischen Flächenbereich aufweist. In diesem Fall braucht bei der Sicherheitsprüfung lediglich Licht auf den photo-voltaischen Flächenbereich des Sicherheitspapiers eingestrahlt zu werden. Der photo-voltaische Flächenbereich liefert ansprechend auf das eingestrahlte Licht die elektrische Betriebsenergie für die Sicherheitsstruktur. Diese besonders vorteilhafte Art der Energieversorgung ist nicht auf Sicherheitspapier und daraus hergestellte Urkunden beschränkt. Sie eignet sich insbesondere auch für die berührungsfreie Energieversorgung von intelligenten Hartplastikkarten, wie sie beispielsweise in der Form von Smart Cards und ähnlichen, insbesondere dem Zahlungsverkehr dienenden Plastikkarten mit integrierter Elektronik bekannt sind.

Durch die Erfindung wird auch eine Vorrichtung zur berührungsfreien Prüfung der Echtheit einer Urkunde aus einem Sicherheitspapier, das mit einem elektronischen Schaltkreischip sowie einem damit verbundenen, in Form einer zwei sich längs einer gemeinsamen Geraden erstreckende Dipolzweige aufweisenden Dipolantenne ausgebildeten und als Sende/Empfangsantenne dienenden Muster versehen ist, wobei der elektronische Schaltkreischip ansprechend auf ein empfangenes Eingangssignal ein das Echtheitsmerkmal darstellendes Ausgangssignal aussendet, geschaffen, die eine Transportvorrichtung, von der die zu prüfenden Urkunden längs eines sich quer zur gemeinsamen Geraden der Dipolzweige erstreckenden Bewegungsweges transportierbar sind, zwei sich in der Transportrichtung erstreckende Leiterbahnen, deren eine im Bereich des Bewegungsweges des einen Dipolzweigs und deren andere im Bereich des Bewegungsweges des anderen Dipolzweiges jeweils zur kapazitiven Kopplung mit den bewegenden Dipolzweigen angeordnet ist, und eine mit den beiden Leiterbahnen gekoppelte Sende/Empfangseinrichtung zur Aussendung des Eingangssignals für den Schaltkreischip und zum Empfang dessen das Echtheitssignal darstellenden Ausgangssignals aufweist.

Bei dieser erfindungsgemäß ausgebildeten Prüfvorrichtung erstrecken sich die beiden als Antenne für die Sende/Empfangseinrichtung der Prüfvorrichtung dienenden Leiterbahnen über eine hinreichende Länge des Bewegungsweges der zu prüfenden Urkunden, wodurch während dieser ganzen Weglänge eine gleichbleibende starke Kopplung an die Dipolantenne der jeweils zu prüfenden Urkunde sichergestellt ist. Die Dipolantenne der zu prüfenden Urkunde kann dabei in der Transportrichtung eine verhältnismäßig geringe Ausdehnung aufweisen, während die beiden Leiterbahnen der Prüfvorrichtung im Vergleich dazu verhältnismäßig lang sind.

In der folgenden Beschreibung ist die Erfindung unter Bezugnahme auf die Zeichnung beispielhaft erläutert. Es zeigen:
- Fig. 1: eine Aufsicht auf die Vorderseite eines Reiseschecks, an dem die Verwirklichung eines zur Echtheitsprüfung dienenden elektronischen Schaltkreises schematisch angedeutet ist,
- Fig. 2: eine Aufsicht auf die Rückseite des in Fig. 1 dargestellten Reiseschecks,
- Fig. 3: eine Fig. 1 entsprechende Ansicht einer anderen Ausführungsform,
- Fig. 4: eine Aufsicht auf die Rückseite der Ausführungsform von Fig. 3,
- Fig. 5: eine schematische Darstellung einer Prüfvorrichtung, und
- Fig. 6: eine Fig. 1 entsprechende Aufsicht einer abgewandelten Ausführungsform.

Der in der Zeichnung abgebildete Reisescheck einer international bekannten Bank ist zum Zwecke der Erläuterung der Erfindung durch die schematische Darstellung eines elektronischen Schaltkreises ergänzt. Letzterer weist einen durch Dotierung leitfähigen Polymerstreifen 1 auf, der in die Papierschicht eingebettet ist. Dies kann in bekannter Weise dadurch geschehen, daß bei der Papierherstellung zunächst eine erste Teilschicht des Papierbreis geschöpft, darauf der Polymerstreifen 1 aufgelegt und anschließend darauf eine zweite Teilschicht des Papierbreis aufgebracht wird. Der Polymerstreifen 1 erstreckt sich parallel zu den beiden kürzeren Seitenrändern 2, 2' über die gesamte Breite des rechteckigen Reiseschecks hinweg bis zu dessen längeren Seitenrändern 3, 3'. Wenngleich der Polymerstreifen 1 beidseits von der Papierschicht bedeckt ist, scheint er in der Zeichnung erkennbar durch die ihn bedeckenden Schichten hindurch.

In der Mitte des Polymerstreifens 1 ist ein integrierter Polymerschaltkreischip ausgebildet, dessen Externanschlüsse von den beiden sich beidseits des Polymerschaltkreischips 4 aus erstreckenden Teilstreifen 5, 5' des Polymerstreifens 1 gebildet sind. Die beiden Teilstreifen 5, 5' sind an ihren auf den längeren Seitenrändern 3, 3' gelegenen Enden 6, 6' kapazitiv oder auch galvanisch mit einem Antennenmuster 7 gekoppelt, das sich ausgehend von den Enden 6, 6' in Form einer Leiterbahn längs den beiden längeren Seitenrändern 3, 3' und dem diese beiden Seitenränder verbindenden kürzeren Seitenrand 2 erstreckt.

Das Antennenmuster 7 könnte ebenfalls während der Papierherstellung in die Papierschicht eingebettet werden, indem es beispielsweise durch Drucken auf der zuerst geschöpften Teilschicht des Papierbreis erzeugt wird. Einfacher und ohne Sicherheitsverlust wird jedoch das Antennenmuster7 außen auf die mit dem eingebetteten Polymerstreifen 1 versehene Papierschicht aufgedruckt. In diesem Fall überlappen die über dem Polymerstreifen 1 liegenden Enden des Antennenmusters 7 die an den längeren Seitenrändern 3, 3' innerhalb der Papierschicht gelegenen Enden 6, 6' der beiden Teilstreifen 5, 5', wobei zwischen den einander überlappenden Bereichen des Antennenmusters 7 und des Polymerstreifens 1 jeweils eine Teilschicht der Papierschicht eingeschlossen ist. Diese Teilschicht wirkt somit als Dielektrikum, durch das das Antennenmuster 7 kapazitiv an den mit dem Polymerschaltkreischip 4 versehenen Polymerstreifen 1 angekoppelt ist.

Der Polymerschaltkreischip 4 bildet einen Mikrocontroller mit einem Festwertspeicher, einem als Schreib/Lesespeicher dienenden Schieberegister und einer Eingangs/Ausgangseinheit, die einen Empfangsteil und einen Sendeteil aufweist. In dem Festwertspeicher sind die auf der Vorderseite des Reiseschecks in optisch lesbarem Klartext aufgedruckte Nummer sowie die Geldwertangabe des Reiseschecks fest abgespeichert.

Zur Prüfung der Echtheit wird der Reisescheck durch ein Prüfgerät hindurchgeführt, das einerseits die aufgedruckten, optisch lesbaren Angaben wie Schecknummer und Geldwertangabe liest. Gleichzeitig sendet dieses Lesegerät ein trägerfrequentes, moduliertes Eingangssignal für den Schaltkreis 1, 4, 7 aus. Dieses Eingangssignal wird in dem Empfangsteil des Schaltkreises dekodiert. Darauf ansprechend steuert der Mikrocontroller den Festwertspeicher und den Sendeteil zur trägerfrequenzmodulierten Aussendung eines Ausgangssignals an, in dem der Informationsinhalt des Festwertspeichers kodiert ist. Das Prüfgerät erfaßt dieses Ausgangssignal und vergleicht den damit übertragenen Informationsinhalt mit den optisch erfaßten Klartextangaben des Reiseschecks. Sofern keine Übereinstimmung besteht, wird der Reisescheck als gefälscht ausgewiesen.

Eine noch höhere Sicherheit wird erreicht, wenn die Urkunde, beispielsweise der Geldschein oder Reisescheck, zusätzlich mit einem zwar nicht optisch, aber durch sonstige technische Mittel, beispielsweise UV-Licht oder magnetisch, erfaßbaren Echtheitsmerkmal an einer von der Lage des Schaltkreises verschiedenen Stelle ausgestattet wird. In diesem Fall erfaßt das Prüfgerät dieses Echtheitsmerkmal und überträgt eine dem erfaßten Echtheitsmerkmal entsprechende Information in den Schaltkreis. Dort wird es intern, beispielsweise durch Vergleich mit einer in dem Schaltkreis abgespeicherten Referenzinformation, überprüft. Der Schaltkreis gibt nur im Falle eines positiven Überprüfungsergebnisses ein die Echtheit anzeigendes Ausgangssignal an das Prüfgerät aus.

Mit dem Eingangssignal überträgt die prüfende Stelle einen sie identifizierenden Informationsinhalt, beispielsweise Name und Ort einer den Reisescheck entgegennehmenden Bank nebst Datum der Prüfung. Gleichzeitig kann die entgegennehmende Bank eine den Einlöser des Reiseschecks, beispielsweise dessen Namen und Anschrift, identifizierende Information zusätzlich mit dem Eingangssignal übertragen und einspeichern. Diese den Einlöser identifizierende Information ist vor allem dann von Interesse, wenn eine Stelle, die den Reisescheck ursprünglich vom Aussteller entgegengenommen hat, diesen Reisescheck an eine dritte Person als Zahlungsmittel weitergibt und diese dritte Person als Einlöser bei der Bank auftritt. Diese Identifikationsinformation wird von dem Mikrokontroller in binärer Form seriell in das Schieberegister eingegeben, wobei ggf. ein Teil früher eingegebener Information am Ausgang des Schieberegisters überfließt und verlorengeht.

Das von dem Prüfgerät an den Schaltkreis übertragene Eingangssignal kann auch mit einem Befehl zum Auslesen des Inhalts des Schieberegisters unter gleichzeitigem Rückschreiben des ausgelesenen Informationsinhalts kodiert werden. Durch die Übertragung des Gesamtinhalts des Schieberegisters in dem Ausgangssignal des Schaltkreises kann das Prüfgerät diesen Informationsinhalt erfassen und auswerten. Auf diese Weise kann durch das Prüfgerät festgestellt werden, welche Prüfstellen eine zu prüfende Urkunde zu welchem Zeitpunkt früher schon durchlaufen hat. Dies ist insbesondere von Bedeutung, wenn es sich bei den Urkunden um mit dem Schaltkreis 1, 4, 7 ausgestattete Banknoten handelt, die im Zuge ihres Umlaufes immer wieder bei entgegennehmenden Banken gezählt werden. Damit läßt sich der Umlaufweg dieser Banknoten überwachen.

Im Falle von Reiseschecks läßt sich deren Sicherheit noch weiter steigern, indem die bezogene Bank bei der Ausgabe des Reiseschecks in den Schreib/Lesespeicher einen mit dem Scheckinhaber vereinbarten zusätzlichen Identifikationskode, beispielsweise einen PIN-Kode, einspeichert. Sofern eine den Reisescheck entgegennehmende Stelle mit einem zum Auslesen dieses zusätzlichen Identifikationskodes geeigneten Gerät ausgestattet ist, kann sie zur Echtheitsprüfung den Aussteller des Schecks dazu auffordern, diesen zusätzlichen Identifikationskode zu benennen, und ihn mit der ausgelesenen Version des zusätzlichen Identifikationskodes vergleichen. Falls keine Übereinstimmung besteht, ist der Reisescheck als unecht zu verwerfen.

Eine auf dem Polymerschaltkreischip 4 integrierte Energieversorgung, welche die Betriebsenergie für den an dem Reisescheck ausgebildeten Schaltkreis 1, 4, 7 liefert, wird aus der Trägerfrequenzschwingung des von dem Prüfgerät übertragenen Eingangssignals gespeist. Auf diese Weise überträgt das Prüfgerät auch die für den Betrieb des Schaltkreises erforderliche Energie.

Es versteht sich, daß das zur Herstellung der vorstehend beschriebenen Reiseschecks verwendete Sicherheitspapier in Bahnen hergestellt wird, in die formatgerecht der Polymerstreifen 1 kontinuierlich zusammenhängend eingebettet wird und die mit dem zugehörigen Antennenmuster versehen werden. Diese Papierbahn wird anschließend beidseits gedruckt und danach formatgerecht geschnitten, wodurch die einzelnen Stücke von Reiseschecks oder dgl. entstehen.

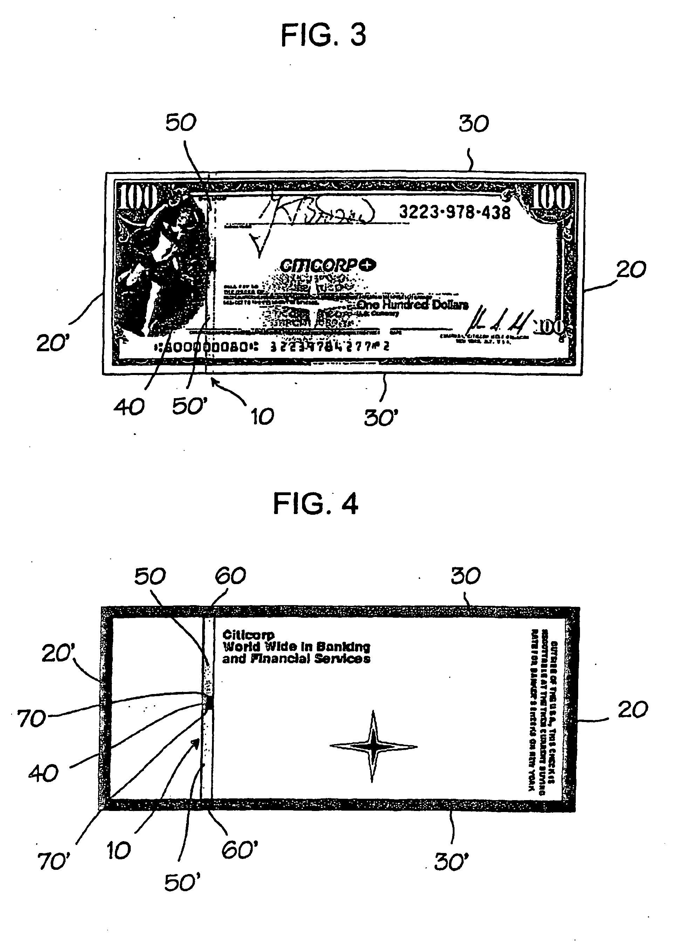

Auch bei der in Fig. 3 und 4 abgebildeten Ausführungsform weist der Reisescheck einen auf einem dünnen Chip 40 ausgebildeten elektronischen Schaltkreis auf. Der Chip 40 ist auf einem Polymerstreifen 10 angeordnet, der in die Papierschicht eingebettet ist. Dies kann in bekannter Weise dadurch geschehen, daß bei der Papierherstellung zunächst eine erste Teilschicht des Papierbreis geschöpft, darauf der Polymerstreifen 10 aufgelegt und anschließend darauf eine zweite Teilschicht des Papierbreis aufgebracht wird. Der Polymerstreifen 10 erstreckt sich parallel zu den beiden kürzeren Seitenrändern 20, 20' über die gesamte Breite des rechteckigen Reiseschecks hinweg bis zu dessen längeren Seitenrändern 30, 30'. Wenngleich der Polymerstreifen 10 beidseits von der Papierschicht bedeckt ist, scheint er in der Zeichnung erkennbar durch die ihn bedeckenden Schichten hindurch.

Der Polymerstreifen 10 ist durch Dotierung leitfähig gemacht. Lediglich in der Mitte zwischen den beiden Seitenrändern 30, 30', wo der integrierte Schaltkreischip 40 angeordnet ist, ist die leitfähige Dotierung derart unterbrochen, daß an einander entgegengesetzten Rändern 70, 70' des Chips 40 ausgebildete Anschlußbereiche des Chips 40 jeweils von einem der beiden sich beidseits der Unterbrechung erstreckenden Teilstreifen 50, 50' des Polymerstreifens 10 kontaktiert sind. Die beiden Teilstreifen 50, 50' bilden auf diese Weise eine an den Chip 40 angeschlossene Dipolantenne, die sowohl der Signalübertragung als auch der Übertragung der Betriebsenergie für den Chip 40 dient.

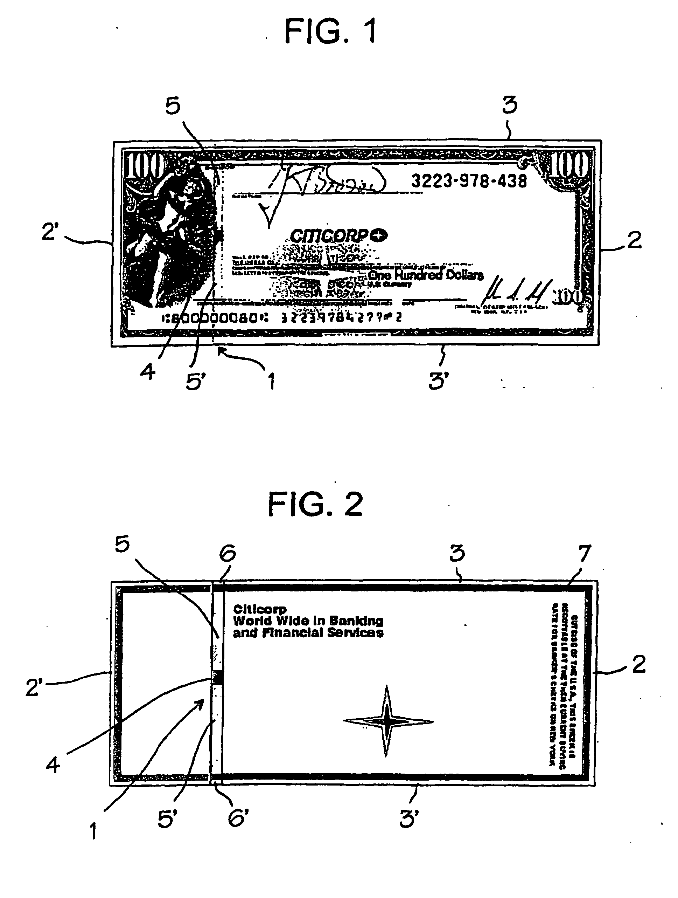

Ebenso wie der Polymerschaltkreischip 4 der Ausführungsform von Fig. 1 und 2 bildet auch der Schaltkreischip 40 der Ausführungsform von Fig. 3 und 4 einen Mikrocontroller mit einem Festwertspeicher, einem als Schreib/Lesespeicher dienenden Schieberegister und einer Eingangs/Ausgangseinheit, die einen Empfangsteil und einen Sendeteil aufweist. In dem Festwertspeicher sind die auf der Vorderseite des Reiseschecks in optisch lesbarem Klartext aufgedruckte Nummer sowie die Geldwertangabe des Reiseschecks fest abgespeichert. Die Prüfung der Echtheit erfolgt ebenso wie vorstehend für die Ausführungsform von Fig. 1 und 2 erläutert.

Banknoten haben dieselbe Erscheinungsform wie die vorstehend anhand von Fig. 1 und 2 erläuterten Reiseschecks. Das Zählen derartiger Banknoten erfolgt gewöhnlich dadurch, daß von einem Stapel zu zählender Banknoten die jeweils oberste Banknote um eine ihrer längeren Seitenkanten 30 bzw. 30' gewendet und auf diese Weise auf einen gezählten Stapel überführt wird. Während dieses Wendevorgangs durchlaufen dann die die Dipolantenne bildenden Leiterstreifen 50, 50' eine zu den längeren Seitenkanten 30, 30' senkrechte Ebene, so daß die Leiterstreifen 50, 50' in der Mitte dieser Wendebewegung senkrecht auf der Ebene der Banknoten stehen, die auf dem zu zählenden bzw. gezählten Stapel liegen. Unter Ausnutzung der Richtcharakteristik der Dipolantenne kann das Prüfgerät derart eingerichtet werden, daß die maximale Ankopplung an die Dipolantenne 50, 50' in der Mitte des Wendeweges jeder Banknote zwischen dem zu zählenden Stapel und dem gezählten Stapel erreicht wird. Damit läßt sich ein Nebensprechen der auf den beiden Stapeln liegenden Banknoten beim Zählvorgang unterdrücken.

Wie bei der Ausführungsform von Fig.. 1 und 2 wird eine auf dem Schaltkreischip 40 integrierte Energieversorgung, welche die Betriebsenergie liefert, aus der Trägerfrequenzschwingung des von dem Prüfgerät übertragenen Eingangssignals gespeist. Alternativ oder auch zusätzlich könnte Betriebsenergie von einem auf der Urkunde angeordneten photo-voltaischen Bereich gewonnen werden. Auf diese Weise überträgt das Prüfgerät auch die für den Betrieb des Schaltkreischips 40 erforderliche Energie.

Das Sicherheitspapier wird in Bahnen hergestellt, in die entsprechend dem Format der aus dem Sicherheitspapier herzustellenden Geldscheine, Reiseschecks, Urkunden und dgl. der Polymerstreifen 10 mit dem daran unter einem dem Abstand der Seitenränder 30, 30' entsprechenden Abstand angeordneten Chips 40 kontinuierlich zusammenhängend eingebettet wird. Diese Papierbahn wird anschließend beidseits gedruckt und danach formatgerecht geschnitten, wodurch die einzelnen Stücke von Banknoten, Reiseschecks oder dgl. entstehen, in denen sich die als Dipolantenne dienenden Teilstreifen mit ihren Enden 60, 60' bis zu den Seitenrändern 30, 30' der geschnittenen Stücke erstrecken.

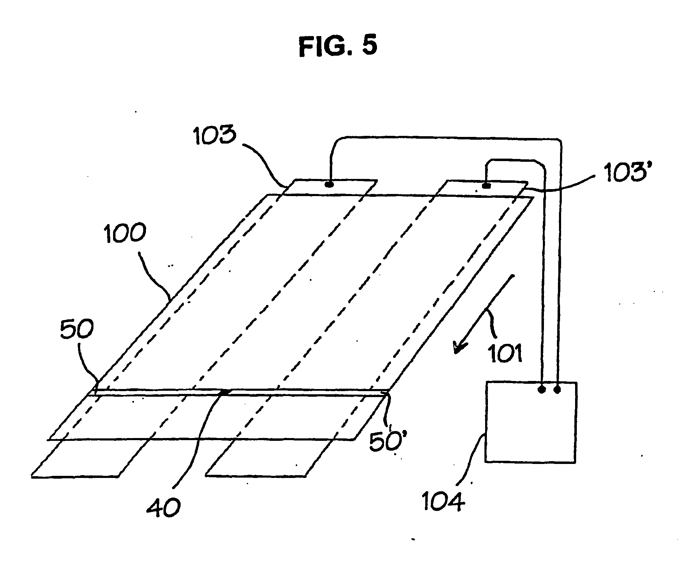

Fig. 5, in der wesentliche Teile einer Prüfvorrichtung schematisch dargestellt sind, läßt eine zu prüfende Urkunde 100, beispielsweise eine Banknote, erkennen, die von einer nicht dargestellten Transportvorrichtung in einer durch einen Pfeil 101 veranschaulichten Transportrichtung längs eines Bewegungsweges transportiert wird. Die Urkunde 100 entspricht der in den Fig. 3 und 4 dargestellten Ausführungsform. Die Ausrichtung der Urkunde 100 ist derart, daß sich die beiden an den Schaltkreischip 40 angeschlossenen Leiterstreifen 50, 50', welche die offene Dipolantenne bilden, quer zur Transportrichtung 101 erstrecken.

Die Prüfvorrichtung weist zwei langgestreckte Leiterbahnen 103, 103' auf, die sich mit ihrer Längsrichtung längs der Transportrichtung 101 erstrecken und derart angeordnet sind, daß die eine Leiterbahn 103 im Bereich des Bewegungsweges des einen Dipolzweigs 50 und die andere Leiterbahn 103' im Bereich des Bewegungswegs des anderen Dipolzweigs 50' angeordnet ist. Auf diese Weise ist die Urkunde 100 während ihrer Bewegung durch die Prüfvorrichtung mit gleichbleibender Stärke an die beiden Leiterbahnen 103, 103' kapazitiv angekoppelt. Letztere dienen als Sende/Empfangsantenne für eine damit verbundene Sende/Empfangseinrichtung 104 der Prüfvorrichtung. Auf diese Weise wird von der Sende/Empfangseinrichtung 104 der Prüfvorrichtung das Eingangssignal für den Schaltkreischip 40 zuverlässig übertragen und das von dem Schaltkreischip 40 ausgesendete Ausgangssignal zuverlässig empfangen.

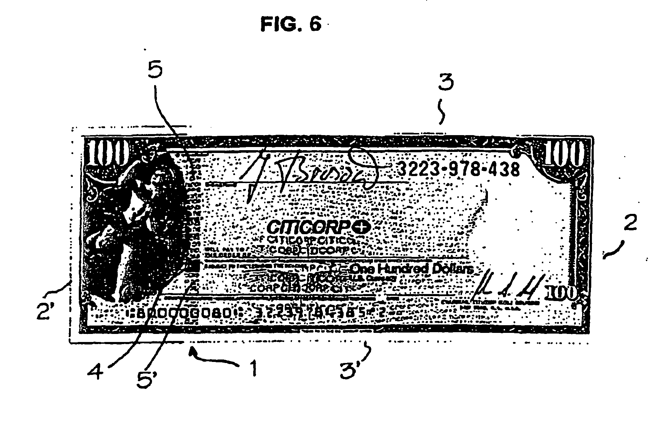

Die in Fig. 6 dargestellte Ausführungsform weicht von der in Fig. 1 und 2 dargestellten Ausführungsform lediglich hinsichtlich der lagemäßigen Anordnung des Schaltkreischips 4 ab. Im übrigen besteht völlige Übereinstimmung mit der Ausführungsform Fig. 1 und 2, und es wird insoweit auf deren vorstehende Beschreibung verwiesen, wobei in Fig. 6 für die mit Fig. 1 übereinstimmenden Teile dieselben Bezugszeichen verwendet sind.

Fig. 6 verdeutlicht abweichend von Fig. 1 die in bezug auf die beiden Querränder 2, 2' und die beiden Längsränder 3, 3' unsymmetrische Lage des Schaltkreischips 4 auf der Urkunde. Auf diese Weise meidet der Schaltkreischip 4 den Bereich der sich in der Mitte zwischen den beiden Längsrändern 3, 3' parallel dazu erstreckenden Längsmittellinie und auch den Bereich der sich in der Mitte zwischen den beiden Querrändern 2, 2' und parallel dazu erstreckenden Quermittellinie der Urkunde. Sofern die Urkunde, insbesondere der Geldschein, längs diesen beiden gedachten Mittellinien gefaltet wird, wird der Schaltkreischip 4 von dieser Faltung nicht berührt. Dies bedeutet, daß beim üblichen Falten keine Beschädigungsgefahr auftritt. Diese unsymmetrische Lageanordnung des Schaltkreischips 4 ist für alle Ausführungsformen vorteilhaft, insbesondere auch für die Anordnung des Schaltkreischips 40 der in Fig. 3 und 4 dargestellten Ausführungsform.

Oftmals weisen Urkunden, insbesondere Geldscheine, einen Bereich auf, der nicht bedruckt wird. In diesem Bereich findet sich oftmals ein Wasserzeichen in der Papierschicht. Bei allen Ausführungsformen ist es von Vorteil, den Schaltkreischip 4 oder 40 in einem solchen unbedruckten Bereich anzuordnen, wodurch Belastungen des Schaltkreischips beim späteren Druckvorgang vermieden werden.

Bei allen Ausführungsformen ist es ferner von Vorteil, daß das als Sende/Empfangsantenne dienende Muster aus einem Material hergestellt wird, dessen Ausdehnungskoeffizient im wesentlichen dem Ausdehnungskoeffizienten der mit dem Muster verbundenen Papierschicht entspricht. Verziehungen oder Verwerfungen des Sicherheitspapiers oder gar Ablösungen des Musters können dadurch vermieden werden.

## Patentansprüche

1. Sicherheitspapier mit einer eine berührungsfreie Prüfung eines Echtheitsmerkmals ermöglichenden Struktur in Form eines elektronischen Schaltkreises (1, 4, 7), der einen elektronischen Schaltkreischip und ein damit verbundenes, als Sende/Empfangsantenne dienendes Muster (7) aufweist und ansprechend auf ein empfangenes Eingangssignal ein das Vorhandensein des Echtheitsmerkmals darstellendes Ausgangssignal aussendet und dessen als Sende/Empfangsantenne dienendes Muster (50, 50') die Form einer Dipolantenne aufweist, die aus zwei sich längs einer gemeinsamen Geraden erstreckenden Leiterstreifen (50, 50') besteht, die an ihren einander zugewandten Enden mit Anschlußbereichen (70, 70') des Schaltkreischips (40) kontaktiert sind, **dadurch gekennzeichnet, daß** die Leiterstreifen (50, 50') durch mittels Dotierung leitfähig gemachte Abschnitte eines isolierenden dünnen Polymersubstratstreifens gebildet sind, auf dessen zwischen den einander zugewandten Enden der Leiterstreifen (50, 50') begrenztem isolierenden Abschnitt der Schaltkreischip (40) angeordnet ist, und daß der Schaltkreischip (40) auf einem dünngeschliffenen Halbleitersubstrat ausgebildet ist, das auf dem isolierenden Abschnitt des Polymersubstratstreifens angeordnet ist.

2. Sicherheitspapier mit einer eine berührungsfreie Prüfung eines Echtheitsmerkmals ermöglichenden Struktur in Form eines elektronischen Schaltkreises (1, 4, 7), der einen elektronischen Schaltkreischip und ein damit verbundenes, als Sende/Empfangsantenne dienendes Muster (7) aufweist und ansprechend auf ein empfangenes Eingangssignal ein das Vorhandensein des Echtheitsmerkmals darstellendes Ausgangssignal aussendet und dessen als Sende/Empfangsantenne dienendes Muster (50, 50') die Form einer Dipolantenne aufweist, die aus zwei sich längs einer gemeinsamen Geraden erstreckenden Leiterstreifen (50, 50') besteht, die an ihren einander zugewandten Enden mit Anschlußbereichen (70, 70') des Schaltkreischips (40) kontaktiert sind, **dadurch gekennzeichnet, daß** die Leiterstreifen (50, 50') durch mittels Dotierung leitfähig gemachte Abschnitte eines isolierenden dünnen Polymersubstratstreifens gebildet sind, auf dessen zwischen den einander zugewandten Enden der Leiterstreifen (50, 50') begrenztem isolierenden Abschnitt der Schaltkreischip (40) angeordnet ist, und daß die den Schaltkreis (1, 4, 7) bildende Struktur einen auf einem flexiblen Polymersubstrat ausgebildeten integrierten Polymerschaltkreischip (4) aufweist.

3. Sicherheitspapier nach einem der Ansprüche 1 oder 2, **dadurch gekennzeichnet, daß** die Leiterstreifen (50, 50') von Perforierungen durchbrochen sind.

4. Sicherheitspapier nach einem der Ansprüche 1 bis 3, **dadurch gekennzeichnet, daß** die den Schaltkreis (1, 4, 7) bildende Struktur einen auf einen vorgegebenen Informationsinhalt eingestellten Festwertspeicher aufweist, dessen Informationsinhalt mit dem ausgesendeten Ausgangssignal übertragbar ist.

5. Sicherheitspapier nach einem der Ansprüche 1 bis 4, **dadurch gekennzeichnet, daß** die den Schaltkreis bildende Struktur (1, 4, 7) einen mit einem von dem empfangenen Eingangssignal übertragenen Informationsinhalt beschreibbaren Schreib/Lesespeicher aufweist, dessen Informationsinhalt mit dem ausgesendeten Ausgangssignal übertragbar ist.

6. Sicherheitspapier nach Anspruch 5, **dadurch gekennzeichnet, daß** der Schreib/Lesespeicher durch ein Schieberegister gebildet ist, in das eine binäre Darstellung des mit dem Eingangssignal übertragenen Informationsinhaltes sequentiell einspeicherbar ist.

7. Sicherheitspapier nach einem der Ansprüche 1 bis 6, **dadurch gekennzeichnet, daß** die den Schaltkreis bildende Struktur (1, 4, 7) eine durch berührungslose Energieübertragung speisbare Energieversorgung aufweist.

8. Stcherheitspapier nach Anspruch 7, **dadurch gekennzeichnet, daß** die Energieübertragung durch eine zur Modulation mit dem Eingangssignal vorgesehene Trägerfrequenzschwingung erfolgt.

9. Sicherheitspapier nach einem der Ansprüche 1 bis 8, **dadurch gekennzeichnet, daß** die den Schaltkreis (1, 4, 7) bildende Struktur in die Papierschicht des Sicherheitspapiers eingebettet ist.

10. Sicherheitspapier nach einem der Ansprüche 1 bis 9, **dadurch gekennzeichnet, daß** die Struktur einen als Energielieferant dienenden photo-voltalschen Flächenbereich aufweist, die Leiterstreifen (50, 50') durch leitende Beläge auf einer Seite einer dünnen isolierenden Trägerfolle gebildet und der photo-voltaische Bereich auf der anderen Seite der Trägerfolie ausgebildet ist.

11. Sicherheitspapier nach einem der Ansprüche 1 bis 10, **dadurch gekennzeichnet, daß** das als Sende/Empfangsantenne dienende Muster (1, 5, 5', 7, 50, 50') aus einem Material besteht, dessen Ausdehnungskoeffizient im wesentlichen dem Ausdehnungskoeffizienten der Papierschicht entspricht.

12. Sicherheitspapier nach einem der Ansprüche 1 bis 11, **dadurch gekennzeichnet, daß** der Schaltkreis (1, 4, 7; 40, 50, 50', 70, 70') einen Mikrokontroller aufweist.

13. Urkunde aus einem Sicherheitspapier nach einem der Ansprüche 1 bis 12, **dadurch gekennzeichnet, daß** der Schaltkreischip (4, 40) in einem unbedruckten Bereich der Urkunde angeordnet ist.

14. Urkunde aus einem Sicherheitspapier nach einem der Ansprüche 1 bis 13, **dadurch gekennzeichnet, daß** in einem von dem den elektronischen Schaltkreis (4, 40) aufweisenden Bereich der Urkunde abgerückten Bereich der Urkunde ein berührungsfrei erfaßbares Echtheitsmerkmal ausgebildet ist, das in den Schaltkreis eingebbar und dort überprüfbar Ist.

15. Vorrichtung zur berührungsfreien Prüfung der Echtheit einer Urkunde aus einem Sicherheitspapier, das mit einem elektronischen Schaltkreischip sowie einem damit verbundenen, in Form einer zwei sich längs einer gemeinsamen Geraden erstreckende Dipolzweige aufweisenden Dipolantenne ausgebildeten und als Sende/Empfangsantenne dienenden Muster versehen ist, wobei der elektronische Schaltkreischip ansprechend auf ein empfangenes Eingangssignal ein das Echtheitsmerkmal darstellendes Ausgangssignal aussendet, **gekennzeichnet durch** eine Transportvorrichtung, von der die zu prüfenden Urkunden (100) längs eines sich quer zur gemeinsamen Geraden der Dipolzweige (50, 50') erstreckenden Bewegungsweges transportierbar sind, zwei sich in der Transportrichtung (101) erstreckende Leiterbahnen (103, 103'), deren eine im Bereich des Bewegungsweges des einen Dipolzweigs (50) und deren andere Im Bereich des Bewegungsweges des anderen Dipolzweiges (50') jeweils zur kapazitiven Kopplung mit den bewegenden Dipolzweigen (50, 50') angeordnet ist, und eine mit den beiden Leiterbahnen (103,103') gekoppelte Sende/Empfangseinrichtung zur Aussendung des Eingangssignals für den Schaltkreischip (40) und zum Empfang dessen das Echtheitssignal darstellenden Ausgangssignals.

## Claims

1. A security paper with a structure permitting contactless checking of an authenticity feature, the structure being in the form of an electronic circuit (1, 4, 7) which comprises an electronic circuit chip and a pattern (7) connected thereto and serving as a sending/receiving antenna, and which emits an output signal indicating the presence of the authenticity feature in response to a received input signal, and of which the pattern (50, 50') serving as a sending/receiving antenna is in the form of a dipole antenna comprising two conductor strips (50, 50') extending along a common straight line and, at their facing ends, being contacted by connecting regions (70, 70') of the circuit chip (40), **characterised in that** the conductor strips (50, 50') are formed by portions of an insulating thin polymer substrate strip that have been rendered conductive by doping, on the insulating portion of which strip, bounded between the facing ends of the conductor strips (50, 50'), the circuit chip (40) is arranged, and that the circuit chip (40) is formed on a thin-ground semiconductor substrate arranged on the insulating portion of the polymer substrate strip.

2. A security paper with a structure permitting contactless checking of an authenticity feature, the structure being in the form of an electronic circuit (1, 4, 7) which comprises an electronic circuit chip and a pattern (7) connected thereto and serving as a sending/receiving antenna, and which emits an output signal indicating the presence of the authenticity feature in response to a received input signal, and of which the pattern (50, 50') serving as a sending/receiving antenna is in the form of a dipole antenna comprising two conductor strips (50, 50') extending along a common straight line and, at their facing ends, being contacted by connecting regions (70, 70') of the circuit chip (40), **characterised in that** the conductor strips (50, 50') are formed by portions of an insulating thin polymer substrate strip that have been rendered conductive by doping, on the insulating portion of which strip, bounded between the facing ends of the conductor strips (50, 50'), the circuit chip (40) is arranged, and **in that** the structure forming the circuit (1, 4, 7) comprises an integrated polymer circuit chip (4) formed on a flexible polymer substrate.

3. A security paper according to either one of clams 1 and 2, **characterised in that** the conductor strips (50, 50') are pierced by perforations.

4. A security paper according to any one of claims 1 to 3, **characterised in that** the structure forming the circuit (1, 4, 7) has a read-only memory set to a predetermined information content which can be transmitted with the emitted output signal.

5. A security paper according to any one of claims 1 to 4, **characterised in that** the structure forming the circuit (1, 4, 7) has a read/write memory writable with an information content transmitted by the received input signal and transmittable with the emitted output signal.

6. A security paper according to claim 5, **characterised in that** the read/write memory is formed by a shift register in which a binary representation of the information content transmitted with the input signal is sequentially storable.

7. A security paper according to any one of claims 1 to 6, chara.cterised in that the structure forming the circuit (1, 4, 7) has an energy supply which is feedable by contactless energy transfer.

8. A security paper according to claim 7, **characterised in that** the energy transfer takes place by carrier frequency oscillation provided for modulation by the input signal.

9. A security paper according to any one of claims 1 to 8, **characterised in that** the structure forming the circuit (1, 4, 7) is embedded in the paper layer of the security paper.

10. A security paper according to any one of claims 1 to 9, **characterised in that** the structure has a photovoltaic surface area serving as an energy supplier, the conductor strips (50, 50') are formed by conductive coatings on one side of a thin insulating carrier foil, and the photovoltaic area is formed on the other side of the carrier foil.

11. A security paper according to any one of claims 1 to 10, **characterised in that** the pattern (1, 5, 5', 7, 50, 50') serving as a sending/receiving antenna comprises a material with an expansion coefficient corresponding substantially to the expansion coefficient of the paper layer.

12. A security paper according to any one of claims 1 to 11, **characterised in that** the circuit (1, 4, 7; 40, 50, 50', 70, 70') has a microcontroller.

13. A document made of a security paper according to any one of claims 1 to 12, **characterised in that** the circuit chip (4, 40) is arranged in an unprinted area of the document.

14. A document made of a security paper according to any one of claims 1 to 13, **characterised in that**, in an area of the document remote from the area of the document in which the electronic circuit (4, 40) is contained, an authenticity feature is formed that is contactlessly detectable and can be input into the circuit and checked therein.

15. A device for contactlessly checking the authenticity of a document made of a security paper provided with an electronic circuit chip and a pattern which is connected thereto and serves as a sending/receiving antenna and is in the form of a dipole antenna having two dipole branches extending along a common straight line, wherein the electronic circuit chip, in response to a received input signal, emits an output signal representing the authenticity feature, **characterised by** a transport device by which the documents (100) to be checked are transportable along a path of movement extending transversely to the common straight line of the dipole branches (50, 50'), by two conductive tracks (103, 103') extending in the transportation direction (101), one of which is arranged in the region of the path of movement of the one dipole branch (50) and the other in the region of the path of movement of the other dipole branch (50'), in each case for capacitive coupling to the moving dipole branches (50, 50'), and by a sending/receiving device coupled to the two conductive tracks (103, 103') for emitting the input signal for the circuit chip (40) and for receiving its output signal representing the authenticity signal.

## Revendications

1. Papier de sécurité comportant une structure permettant une vérification sans contact d'une caractéristique d'authenticité et ayant la forme d'un circuit de commutation électronique (1, 4, 7), lequel circuit de commutation comporte une puce à circuit de commutation électronique et un motif (7) relié à cette dernière et servant d'antenne d'émission/réception ; émet, en réponse à un signal d'entrée reçu, un signal de sortie représentant la présence de la caractéristique d'authenticité ; et dont le motif (50, 50') servant d'antenne d'émission/réception a la forme d'une antenne dipôle qui est constituée de deux bandes conductrices (50, 50') s'étendant le long d'une ligne droite commune qui, à leurs extrémités opposées, sont connectées à des zones de connexion (70, 70') de la puce à circuit de commutation (40), **caractérisé en ce que** les bandes conductrices (50, 50') sont formées par des parties rendues, par dopage, conductrices d'une bande isolante mince de substrat en polymère, la puce à circuit de commutation (40) étant disposée sur la partie isolante de cette dernière, délimitée par les extrémités opposées des bandes conductrices (50, 50') et **en ce que** la puce à circuit de commutation (40) est réalisée sur un substrat semi-conducteur poli en lamelle qui est disposé sur la partie isolante de la bande de substrat en polymère.

2. Papier de sécurité comportant une structure permettant une vérification sans contact d'une caractéristique d'authenticité et ayant la forme d'un circuit de commutation électronique (1, 4, 7), lequel circuit de commutation comporte une puce à circuit de commutation électronique et un motif (7) relié à cette dernière et servant d'antenne d'émission/réception ; émet, en réponse à un signal d'entrée reçu, un signal de sortie représentant la présence de la caractéristique d'authenticité ; et dont le motif (50, 50') servant d'antenne d'émission/réception a la forme d'une antenne dipôle qui est constituée de deux bandes conductrices (50, 50') s'étendant le long d'une ligne droite commune qui, à leurs extrémités opposées, sont connectées à des zones de connexion (70, 70') de la puce à circuit de commutation (40), **caractérisé en ce que** les bandes conductrices (50, 50') sont formées par des parties rendues, par dopage, conductrices d'une bande isolante mince de substrat en polymère, la puce à circuit de commutation (40) étant disposée sur la partie isolante de cette dernière, délimitée par les extrémités opposées des bandes conductrices (50, 50'), et **en ce que** la structure formant le circuit de commutation (1, 4, 7) comporte une puce (4) à circuit de commutation en polymère intégrée qui est réalisée sur un substrat flexible en polymère.

3. Papier de sécurité selon l'une des revendications 1 et 2, **caractérisé en ce que** les bandes conductrices (50, 50') sont perforées.

4. Papier de sécurité selon l'une des revendications 1 à 3, **caractérisé en ce que** la structure formant le circuit de commutation (1, 4, 7) comporte une mémoire morte qui est réglée sur un contenu informationnel donné, et dont le contenu informationnel peut être transmis avec le signal de sortie émis.

5. Papier de sécurité selon l'une des revendications 1 à 4, **caractérisé en ce que** la structure formant le circuit de commutation (1, 4, 7) comporte une mémoire à lecture-écriture dans laquelle un contenu informationnel transmis avec le signal d'entrée reçu peut être inscrit et dont le contenu informationnel peut être transmis avec le signal de sortie émis.

6. Papier de sécurité selon la revendication 5, **caractérisé en ce que** la mémoire à lecture-écriture est formée par un registre à décalage dans lequel une représentation binaire du contenu informationnel transmis avec le signal d'entrée peut être mise en mémoire de manière séquentielle.

7. Papier de sécurité selon l'une des revendications 1 à 6, **caractérisé en ce que** la structure formant le circuit de commutation (1, 4, 7) comporte une alimentation en énergie pouvant être alimentée par transmission d'énergie sans contact.

8. Papier de sécurité selon la revendication 7, **caractérisé en ce que** la transmission d'énergie a lieu au moyen d'une oscillation de fréquence porteuse prévue pour la modulation avec le signal d'entrée.

9. Papier de sécurité selon l'une des revendications 1 à 8, **caractérisé en ce que** la structure formant le circuit de commutation (1, 4, 7) est implantée dans la couche de papier du papier de sécurité.

10. Papier de sécurité selon l'une des revendications 1 à 9, **caractérisé en ce que** la structure comporte une zone photovoltaïque plane servant de fournisseur d'énergie, les bandes conductrices (50, 50') sont formées par des revêtements conducteurs sur une face d'un film-support isolant mince et la zone photovoltaïque est formée sur l'autre face du film-support.

11. Papier de sécurité selon l'une des revendications 1 à 10, **caractérisé en ce que** le motif servant d'antenne d'émission/réception (1, 5, 5', 7, 50, 50') se compose d'une matière dont le coefficient de dilatation correspond sensiblement au coefficient de dilatation de la couche de papier.

12. Papier de sécurité selon l'une des revendications 1 à 11, **caractérisé en ce que** le circuit de commutation (1, 4, 7 ; 40, 50, 50', 70, 70') comporte un microrégisseur.

13. Document fait à partir d'un papier de sécurité selon l'une des revendications 1 à 12, **caractérisé en ce que** la puce à circuit de commutation (4, 40) est disposée dans une zone non imprimée du document.

14. Document fait à partir d'un papier de sécurité selon l'une des revendications 1 à 13, **caractérisé en ce qu'**une caractéristique d'authenticité qui peut être détectée sans contact et qui peut être entrée dans le circuit de commutation et y être vérifiée est réalisée dans une zone du document éloignée de la zone du document où se trouve le circuit de commutation électronique (4, 40).

15. Dispositif servant à vérifier sans aucun contact l'authenticité d'un document fait à partir d'un papier de sécurité qui est muni d'une puce à circuit de commutation électronique ainsi que d'un motif qui est relié à celle-ci, est réalisé sous la forme d'une antenne dipôle comportant deux branches de dipôle s'étendant le long d'une ligne droite commune et sert d'antenne d'émission/réception, la puce à circuit de commutation électronique émettant, en réponse à un signal d'entrée reçu, un signal de sortie représentant la caractéristique d'authenticité, **caractérisé par** un dispositif de transport au moyen duquel les documents à vérifier (100) peuvent être déplacés selon un trajet s'étendant transversalement à la droite commune des branches de dipôle (50, 50') ; deux pistes conductrices (103, 103') s'étendant dans la direction de transport (101), dont la première est disposée dans la zone du trajet de la première branche de dipôle (50) et dont la seconde est disposée dans la zone du trajet de l'autre branche de dipôle (50'), pour chaque fois assurer un couplage capacitif avec les branches de dipôle (50, 50') en cours de déplacement ; et un dispositif d'émission/réception couplé aux deux pistes conductrices (103, 103') et servant à émettre le signal d'entrée destiné à la puce à circuit de commutation (40) et à recevoir le signal de sortie de cette dernière qui constitue le signal d'authenticité.
